# EUROPEAN PATENT SPECIFICATION

(11) **EP 2 131 563 B1**
(45) Date of publication and mention of the grant of the patent: **29.12.2010**
(21) Application number: 08290515.9
(22) Date of filing: 04.06.2008
(51) Int. Cl.: H04M 11/06

(54) **Line termination board with multi type xDSL line high pass filters**
Leitungsabschlussplatte mit mehreren xDSL-Leitungshochpassfiltern
Carte de terminaison de ligne avec plusieurs types de filtre passe haut de ligne xDSL

(43) Date of publication of application: 09.12.2009
(73) Proprietor: Alcatel Lucent, 75008 Paris (FR)
(72) Inventor: Thomson, Wim, 2550 Kontich (BE)
(74) Representative: Narmon, Gisèle Marie Thérèse

(56) References cited:
- WO-A-03/092234
- US-A1- 2003 227 966

## Description

The present invention relates to an xDSL line termination board comprising a plurality of high pass filters, each of said filters comprising a circuitry of components adapted to filter xDSL signals transmitted therethrough, at least one high pass filter of said plurality is provided with controlled switches coupled across predetermined components of the circuitry of said one filter.

Such an xDSL line termination board is generally known in the art of telecommunication systems, each board comprising several xDSL filters associated to a distinct telecommunication line. Today, telecom operators want to migrate from POTS or ISDN over xDSL to VoIP over xDSL services, but there may be customers that still want stay using, at least for some time, POTS or ISDN over xDSL. This implies the need to have a customer based migration.

It is possible to have VoIP over xDSL with the existing xDSL equipment at the cost of reducing a part of the available bitrate or of lowering the supported loop lengths. The reduced bitrate negatively affects the quality of digital TV and/or Internet access.

When the POTS or ISDN signals are removed from the cable, it becomes possible to use these low frequencies also for the xDSL service. The xDSL flavors which use these low frequency bands are known as Type/Annex M/J/I, these Annexes/Types are defined in the following Standards:
ITU - International Telecommunication Union ( http://www.itu.int):
   G.992.1 : Asymmetric digital subscriber line (ADSL) transceivers.
   G.992.3 : Asymmetric digital subscriber line transceivers 2 (ADSL2).
   G.992.5 : Asymmetric Digital Subscriber Line (ADSL) transceivers - Extended bandwidth ADSL2 (ADSL2+).
   G.993.1 : Very high speed digital subscriber line transceivers.
   G.993.2 : Very high speed digital subscriber line transceivers 2 (VDSL2).
ANSI - American National Standards Institute ( http://webstore.ansi.org):
   T1.413 : Asymmetric digital subscriber line (ADSL) Metallic Interface.
   T1.424 : Very-high-bit-rate Digital Subscriber Lines (VDSL) Metallic Interface (DMT based).
ETSI - European Telecommunications Standards Institute ( http://www.etsi.org ):
   TS 101 388 : Asymmetric Digital Subscriber Line (ADSL) - European specific requirements.
   TS 101 270 : Very high speed Digital Subscriber Line (VDSL).

However, because the existing xDSL POTS/Type A/Annex A or ISDN/Type B/Annex B high pass filters, typically placed on current xDSL line termination board, are fixed for Annex/Type A or B operations, the extra low frequencies signals used by Annex/Type M/J/I compared to Annex/Type A/B are highly attenuated by each existing high pass of the board. This high attenuation leads to low bitrate or no bitrate increase.

The only way to get a normal bitrate increase, by the extra low frequencies signals used by xDSL Annex/Type M/J/I compared to Annex/Type A/B, is to lower the f-3dB frequency and sometimes also by lowering the order of the existing high pass filter of each telecommunication line.

An object of the present invention is to provide an xDSL line termination board of the above known type but wherein a high pass filter is adapted to the type of xDSL services requested by the customer of which the telecommunication line is associated to this filter.

According to the invention, this object is achieved due to the fact that at least one filter of said plurality is a 3rd order high pass filter having a primary side with a first input terminal and a second input terminal and a secondary side with a first output terminal and a second output terminal,
said filter comprising a transformer with a first primary winding, a first secondary winding, a second primary winding and a second secondary winding,
said first and second input terminal being interconnected via the series connection of said first primary winding, a first capacitor, a second capacitor and said second primary winding, whilst said first and second output terminal are interconnected via the series connection of said first secondary winding, a third capacitor, a fourth capacitor and said second secondary winding, and
a first controlled switch is connected across said first capacitor, whilst a second controlled switch is connected across said fourth capacitor, and a third controlled switch is connected across said second primary winding, whilst a fourth controlled switch is connected across said second secondary winding.

Owing to the controlled switches S1a, S1b, S2a, S2b provided on each high pass filter of the xDSL line termination board, an operator can individually control and optimize the bitrate gain of each filter. In other words, a same line termination board can be used for Type/Annex A/B/M/J/I xDSL. This prevent having one kind of xDSL line termination board for each Annex/Type.

The bitrate gain may for instance be increased for one or more filters when the operator wants to migrate the customers associated to these filters from ISDN over xDSL, i.e. Type/Annex B, or POTS over xDSL, i.e. Type/Annex A, to VoIP, i.e.Voice over IP, over xDSL with Type/Annex M/J/I. Increasing the bitrate with xDSL Annex/Type M/J/I compared to xDSL Annex/Type M/J/I on an existing Annex/Type A/B equipment is very useful for VoIP over xDSL. With the extra bitrate it's possible to support longer loops and/or more simultaneous VoIP calls.

It is to be noted that the Patent Application WO 03/092234 A (FRANCE TELECOM [FR]; RAHYER ALAIN [FR]; MARIOTTE HUBERT [FR]; BENCIVEN) of 6 November 2003 and entitled "Filtering Device, for High Speed Modem in Alternate Mode, Operating as Isolator or Adapter" discloses a filtering device for high speed modem in alternate mode in a copper terminal installation connected to an access network (RA) delivering narrow band services and broadband services, said installation comprising at least one high-speed modem (20) and connecting jacks (P). The device enables operation as adapter when the jacks are not connected to a broadband modem, so as to avoid line mismatch problems, and as isolator when the high-speed modem (20) is connected to a jack (P) so as to avoid perturbations in the broadband transmission. The invention is in particular applicable to broadband transmission based on private systems called Home PNA.

Furthermore, the Patent Application US 2003/227966 A1 (IM JOON-HYUK [KR]) of 11 December 2003 and entitled "Methods, devices and computer program products for adaptively adjusting passbands of high-pass filters of asymmetric digital subscriber link (ADSL) modems" discloses methods and related devices for adjusting the passband and/or cutoff frequency of a high-pass filter of an ADSL modem. Therein, a level of a received ADSL signal is compared with a predetermined signal level to provide a comparison result. A control signal is generated based on the comparison result and the passband and/or the cutoff frequency of the high-pass filter is adjusted responsive to the control signal. Devices and computer program products are also provided

However, none of these known documents discloses nor teaches the characterizing features of the present invention.

In more detail, said first controlled switch and said second controlled switch are adapted to operate identically so as to simultaneously being in a same first state, said third controlled switch and said fourth controlled switch are adapted to operate identically so as to simultaneously being in a same second state, and said second state is opposite to said first state.

In another characterizing embodiment of the present invention, at least one high pass filter of said plurality is a 5th order high pass filter similar to said 3rd order high pass filter but further comprising a fifth capacitor coupled between said first secondary winding and said first output terminal, a sixth capacitor coupled between said second secondary winding and said second output terminal, and a coil coupled between the junction point of said first secondary winding and said fifth capacitor and the junction point of said second secondary winding and said sixth capacitor via the series connection of a fifth controlled switch and a sixth controlled switch, and a seventh controlled switch is connected across said fifth capacitor, whilst a eighth controlled switch is connected across said sixth capacitor.

In more detail, said fifth controlled switch and said sixth controlled switch are adapted to operate identically so as to simultaneously being in a same third state, said seventh controlled switch and said eighth controlled switch are adapted to operate identically so as to simultaneously being in a same fourth state, and said third state is opposite to said fourth state.

Still another characteristic of the present invention is that said first state of the switches is identical to said fourth state, and that said second state is identical to said third state.

Also another characteristic of the present invention is that said xDSL board comprises at least one 3rd order high pass filter and one 5th order high pass filter.

By mixing 3rd order high pass filters and 5th order high pass filters on a same xDSL line termination board, the latter becomes even more universal.

In a preferred characterizing embodiment of the present invention, all the filters of said plurality are provided with controlled switches coupled across predetermined components of the circuitry of said filters.

When all the filters of a same xDSL line termination board are changeable as indicated above by means of the controlled switches, they may individually be adapted to the requirements of each customer. A universal xDSL line termination board is then provided which can support Annex/Type A/B/M/J/I, all with optimal bitrates.

Yet another characteristic of the present invention is that said board is located at the Central Office CO and/or Cabinet side of a telecommunication system.

However, the present invention is also applicable for a Customer Premise Equipment CPE modem-board, i.e. an xDSL Network Termination board.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
Fig. 1 represents a 3rd order high pass filter configurable according to the invention, several such filters being located on a same xDSL line termination board; and
Fig. 2 represents a 5th order high pass filter also configurable according to the invention.

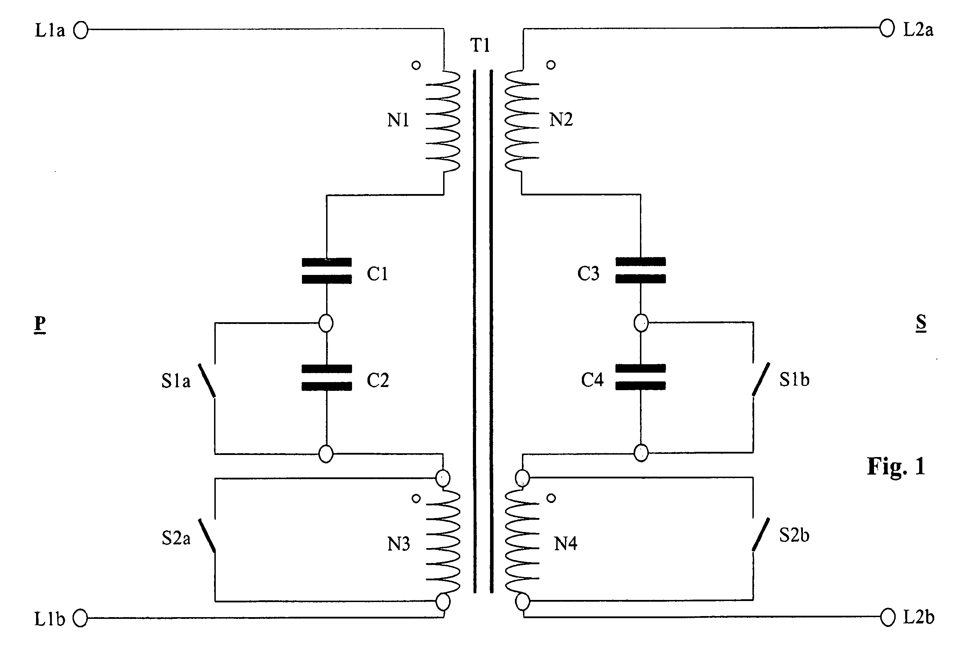

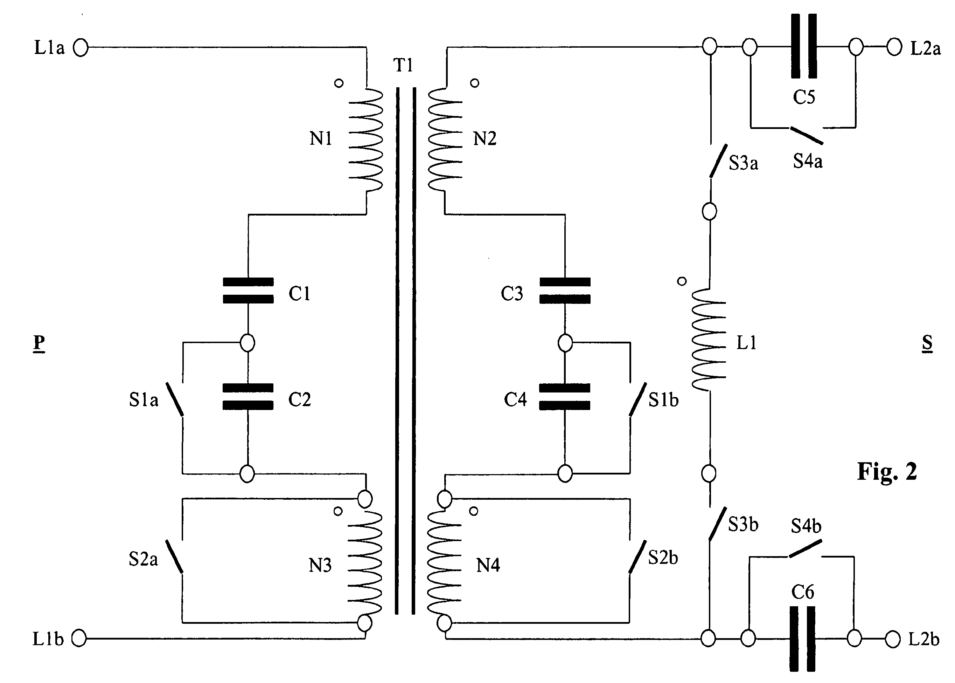

The invention relates to an xDSL line termination board (not shown) onto which are located several high pass filters, such as the 3rd order high pass filter shown at Fig. 1 and/or the 5th order high pass filter shown at Fig. 2. Each of these filters comprises a circuitry of components adapted to filter xDSL signals transmitted therethrough from a primary side P having input terminals L1a, L1b to a secondary side S having output terminals L2a, L2b.

Such an xDSL board is located at the Central Office CO and/or Cabinet side of a telecommunication system, although it may also be a Customer Premise Equipment CPE modem-board, i.e. an xDSL Network Termination board.

In more detail, the 3rd order high pass filter shown at Fig. 1 has a primary side P with a first input terminal L1a and a second input terminal L1b, and a secondary side S with a first output terminal L2a and a second output terminal L2b. This filter comprises a transformer T1 with a first primary winding N1, a first secondary winding N2, second primary winding N3 and a second secondary winding N4. The first L1a and second L1b input terminals are interconnected via the series connection of the first primary winding N1, a first capacitor C1, a second capacitor C2 and the second primary winding N3, whilst the first L2a and second L2b output terminals are interconnected via the series connection of the first secondary winding N2, a third capacitor C3, a fourth capacitor C4 and the second secondary winding N4. The second C2 and fourth C4 capacitors are smaller than the first C1 and the third C3 capacitors.

A first controlled switch S1a is connected across the first capacitor C1, whilst a second controlled switch S1b is connected across the fourth capacitor C4. Furthermore, a third controlled switch S2a is connected across the second primary winding N3, whilst a fourth controlled switch S2b is connected across the second secondary winding N4.

The first S1a and second S1b controlled switches are adapted to operate identically so as to be simultaneously in a same first state, while the third S2a and fourth S2b controlled switches are also adapted to operate identically and simultaneously so as to be in a same second state, the second state being opposite to the first state.

For Annex/Type B operation, the switches S2a and S2b are closed and short both second primary winding N3 and second secondary winding N4 of transformer T1, whilst the switches S1a and S1b are then open leaving the second capacitor C2 and the fourth capacitor C4 operational.

For Annex/Type A/M/J/I operation, the switches S1a and S1b are closed and short both the smaller second capacitor C2 and the fourth capacitor C4, whilst the switches S2a and S2b are then open leaving the second primary winding N3 and the second secondary winding N4 of transformer T1 operational.

The 5th order high pass filter shown at Fig. 2 is similar to the above described 3rd order high pass filter (shown at Fig. 1) but further comprising a fifth capacitor C5 coupled between the first secondary winding N2 of transformer T1 and the first output terminal L2a, and a sixth capacitor C6 coupled between the second secondary winding N4 of transformer T1 and the second output terminal L2b.

The 5th order high pass filter further comprises a coil L1 coupled between the junction point of the first secondary winding N2 of T1 and the fifth capacitor C5 and the junction point of the second secondary winding N4 of T1 and the sixth capacitor C6 by means of the series connection of a fifth controlled switch S3a and a sixth controlled switch S3b.

Furthermore, a seventh controlled switch S4a is connected across the fifth capacitor C5, whilst a eighth controlled switch S4b is connected across the sixth capacitor C6.

The fifth S3a and sixth S3b controlled switches are adapted to operate identically so as to be simultaneously in a same third state, while the seventh S4a and eighth S4b controlled switches are also adapted to operate identically so as to be simultaneously in a same fourth state, the third state being opposite to the fourth state.

Compared to the above 3rd order high pass filter and the corresponding same part of this 5th order high pass filter, the first state of the switches is identical to the fourth state, whilst the second state is identical to the third state.

For Annex/Type B operation, the switches S2a and S2b are closed and short both second primary winding N3 and second secondary winding N4 of transformer T1, whilst the switches S1a and S1b as well as S4a and S4b are then open leaving second C2, fourth C4, fifth C5 and sixth C6 capacitors operational. The switches S3a and S3b are closed so that the coil L1 is then inserted in the filter circuitry.

For Annex/Type A/M/J/I operation, the switches S1a and S1b are closed and short both the smaller second capacitor C2 and the fourth capacitor C4, whilst the switches S2a, S2b, S3b and S3b are then open leaving the second primary winding N3 and second secondary winding N4 operational, while removing the coil L1 from the filter. The switches S4a and S4b are further also closed shorting the fifth C5 and sixth C6 capacitors.

Summarizing, the controlled switches are operated on each individual high pass filter placed on the xDSL line termination board to short or open impedance(s) of the POTS or ISDN over xDSL filter. This results in lower f-3dB frequency and sometimes also lower order of the operated high pass filter. By handling the switches a telecom operator can choose which xDSL Annex/Type A/B/M/J/I will be supported on the corresponding line with always optimal bitrate.

By so increasing the bitrate, longer loops and/or more simultaneous VoIP calls can be supported.

It is to be noted that a same xDSL board may obviously comprise one or more 3rd order high pass filters and one or more 5th order high pass filters.

Also a single kind of xDSL line termination board for Annex/Type A/B/M/J/I is very usefull because of simpler ordering, installation and maintenance. The controlled switches further allow a smooth, customer based, migration from POTS or ISDN over xDSL to VoIP over xDSL.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. An xDSL line termination board comprising a plurality of high pass filters, each of said filters comprising a circuitry of components adapted to filter xDSL signals transmitted therethrough,
at least one high pass filter of said plurality is provided with controlled switches (S1a, S1b; S2a, S2b) coupled across predetermined components (C2, C4; N3, N4) of the circuitry of said one filter,
***characterized in that*** at least one high pass filter of said plurality is a 3rd order high pass filter having a primary side (P) with a first input terminal (L1a) and a second input terminal (L1b) and a secondary side (S) with a first output terminal (L2a) and a second output terminal (L2b),
said filter comprising a transformer (T1) with a first primary winding (N1), a first secondary winding (N2), a second primary winding (N3) and a second secondary winding (N4),
said first (L1a) and second (L1b) input terminal being interconnected via the series connection of said first primary winding (N1), a first capacitor (C1), a second capacitor (C2) and said second primary winding (N3), whilst said first (L2a) and second (L2b) output terminal are interconnected via the series connection of said first secondary winding (N2), a third capacitor (C3), a fourth capacitor (C4) and said second secondary winding (N4),
*and **in that*** a first controlled switch (S1a) is connected across said first capacitor (C1), whilst a second controlled switch (S1b) is connected across said fourth capacitor (C4), and a third controlled switch (S2a) is connected across said second primary winding (N3), whilst a fourth controlled switch (S2b) is connected across said second secondary winding (N4).

2. The xDSL board according to claim **1**,
***characterized in that*** said first controlled switch (S1a) and said second controlled switch (S1b) are adapted to operate identically so as to simultaneously being in a same first state,
***in that*** said third controlled switch (S2a) and said fourth controlled switch (S2b) are adapted to operate identically so as to simultaneously being in a same second state,
*and **in that*** said second state is opposite to said first state.

3. The xDSL board according to claim **1**,
***characterized in that*** at least one high pass filter of said plurality is a 5th order high pass filter similar to said 3rd order high pass filter but further comprising a fifth capacitor (C5) coupled between said first secondary winding (N2) and said first output terminal (L2a), a sixth capacitor (C6) coupled between said second secondary winding (N4) and said second output terminal (L2b), and a coil (L1) coupled between the junction point of said first secondary winding (N2) and said fifth capacitor (C5) and the junction point of said second secondary winding (N4) and said sixth capacitor (C6) via the series connection of a fifth controlled switch (S3a) and a sixth controlled switch (S3b),
*and **in that*** a seventh controlled switch (S4a) is connected across said fifth capacitor (C5), whilst a eighth controlled switch (S4b) is connected across said sixth capacitor (C6).

4. The xDSL board according to claim **3**,
***characterized in that*** said fifth controlled switch (S3a) and said sixth controlled switch (S3b) are adapted to operate identically so as to simultaneously being in a same third state,
***in that*** said seventh controlled switch (S4a) and said eighth controlled switch (S4b) are adapted to operate identically so as to simultaneously being in a same fourth state,
*and **in that*** said third state is opposite to said fourth state.

5. The xDSL board according to the claims **2** and **4**,
***characterized in that*** said first state is identical to said fourth state,
*and **in that*** said second state is identical to said third state.

6. The xDSL board according to claim **3**, ***characterized in that*** said xDSL board comprises at least one 3rd order high pass filter and one 5th order high pass filter.

7. The xDSL board according to claim **1**, ***characterized in that*** all the filters of said plurality are provided with controlled switches coupled across predetermined components of the circuitry of said filters.

8. The xDSL board according to claim **1**, ***characterized in that*** said board is located at the Central Office CO side of a telecommunication system.

9. The xDSL board according to claim **1**, ***characterized in that*** said board is located at the Cabinet side of a telecommunication system.

## Patentansprüche

1. Eine xDSL-Leitungsabschlussplatte mit einer Mehrzahl von Hochpassfiltern, wobei ein jeder der besagten Hochpassfilter eine Schaltkreisanordnung von Komponenten umfasst, welche dazu ausgelegt sind, über diese übertragene xDSL-Signale zu filtern,
wobei mindestens einer der besagten Mehrzahl von Hochpassfiltern mit steuerbaren Switches (S1 a, S1 b; S2a, S2b) versehen ist, welche über vorbestimmte Komponenten (C2, C4; N3, N4) der Schaltkreisanordnung des besagten einen Filters gekoppelt sind,
***dadurch gekennzeichnet, dass*** mindestens einer der besagten Mehrzahl von Hochpassfiltern ein Hochpassfilter 3. Ordnung ist, welcher eine Primärseite (P) mit einer ersten Eingangsklemme (L1a) und einer zweiten Eingangsklemme (L1b) und eine Sekundärseite (S) mit einer ersten Ausgangsklemme (L2a) und einer zweiten Ausgangsklemme (L2b) aufweist,
wobei der besagte Filter einen Transformator (T1) mit einer ersten Primärwicklung (N 1 ), einer ersten Sekundärwicklung (N2), einer zweiten Primärwicklung (N3) und einer zweiten Sekundärwicklung (N4) umfasst,
wobei die besagte erste (L1a) und die besagte zweite (L1 b) Eingangsklemme über die Reihenschaltung der besagten ersten Primärwicklung (N1), eines ersten Kondensators (C1), eines zweiten Kondensators (C2) und der besagten Sekundärwicklung (N3) miteinander verbunden sind, während die besagte erste (L2a) und die besagte zweite (L2b) Ausgangsklemme über die Reihenschaltung der besagten ersten Sekundärwicklung (N2), eines dritten Kondensators (C3), eines vierten Kondensators (C4) und der besagten zweiten Sekundärwicklung (N4) miteinander verbunden sind,
*und dass* ein erster steuerbarer Switch (S1a) über den besagten ersten Kondensator (C1) angeschlossen ist, während ein zweiter steuerbarer Switch (S1b) über den besagten vierten Kondensator (C4) angeschlossen ist, und ein dritter steuerbarer Switch (S2a) über die besagte zweite Primärwicklung (N3) angeschlossen ist, während ein vierter steuerbarer Switch (S2b) über die besagte zweite Sekundärwicklung (N4) angeschlossen ist.

2. Die xDSL-Platte nach Anspruch **1**,
***dadurch gekennzeichnet, dass*** der besagte erste steuerbare Switch (S1a) und der besagte zweite steuerbare Switch (S1b) dazu ausgelegt sind, identisch zu arbeiten, so dass sie sich zeitgleich in einem selben ersten Zustand befinden,
*dass* der besagte dritte steuerbare Switch (S2a) und der besagte vierte steuerbare Switch (S2b) dazu ausgelegt sind, identisch zu arbeiten, so dass sie sich zeitgleich in einem selben zweiten Zustand befinden,
*und dass* der besagte zweite Zustand dem besagten ersten Zustand entgegengesetzt ist.

3. Die xDSL-Platte nach Anspruch **1**,
***dadurch gekennzeichnet, dass*** mindestens einer der besagten Mehrzahl von Hochpassfiltern ein Hochpassfilter 5. Ordnung, ähnlich wie der Hochpassfilter 3. Ordnung, ist, jedoch weiterhin einen fünften Kondensator (C5), welcher zwischen die besagte erste Sekundärwicklung (N2) und die besagte erste Ausgangsklemme (L2a) gekoppelt ist, einen sechsten Kondensator (C6), welcher zwischen die besagte zweite Sekundärwicklung (N4) und die besagte zweite Ausgangsklemme (L2b) gekoppelt ist, und eine Spule (L1), welche zwischen den Verbindungspunkt der besagten ersten Sekundärwindung (N2) und dem besagten fünften Kondensator (C5) und den Verbindungspunkt der besagten zweiten Sekundärwicklung (N4) und dem besagten sechsten Kondensator (C6) über die Reihenschaltung eines fünften steuerbaren Switches (S3a) und eines sechsten steuerbaren Switches (S3b) gekoppelt ist, umfasst,
*und dass* ein siebter steuerbarer Switch (S4a) über den besagten fünften Kondensator (C5) angeschlossen ist, während ein achter steuerbarer Switch (S4b) über den besagten sechsten Kondensator (C6) angeschlossen ist.

4. Die xDSL-Platte nach Anspruch **3**,
***dadurch gekennzeichnet, dass*** der besagte fünfte steuerbare Switch (S3a) und der besagte sechste steuerbare Switch (S3b) dazu ausgelegt sind, identisch zu arbeiten, so dass sie sich zeitgleich in einem selben dritten Zustand befinden,
*dass* der besagte siebte steuerbare Switch (S4a) und der besagte achte steuerbare Switch (S4b) dazu ausgelegt sind, identisch zu arbeiten, so dass sie sich zeitgleich in einem selben vierten Zustand befinden,
*und dass* der besagte dritte Zustand dem besagten vierten Zustand entgegengesetzt ist.

5. Die xDSL-Platte nach den Ansprüchen **2** und **4**, ***dadurch gekennzeichnet, dass*** der besagte erste Zustand mit dem besagten vierten Zustand identisch ist,
*und dass* der besagte zweite Zustand mit dem besagten dritten Zustand identisch ist.

6. Die xDSL-Platte nach Anspruch 3, ***dadurch gekennzeichnet, dass*** die besagte xDSL-Platte mindestens einen Hochpassfilter 3. Ordnung und einen Hochpassfilter 5. Ordnung umfasst.

7. Die xDSL-Platte nach Anspruch **1**, ***dadurch gekennzeichnet, dass*** alle Filter der Mehrzahl von Filtern mit steuerbaren Switches versehen sind, welche über vorbestimmte Komponenten der Filterschaltkreisanordnung gekoppelt sind.

8. Die xDSL-Platte nach Anspruch **1**, ***dadurch gekennzeichnet, dass*** die besagte Platte seitens der Vermittlungsstelle eines Telekommunikationssystems angeordnet ist.

9. Die xDSL-Platte nach Anspruch **1**, ***dadurch gekennzeichnet, dass*** die besagte Platte seitens des Gehäuses eines Telekommunikationssystems angeordnet ist.

## Revendications

1. Carte de terminaison de ligne xDSL comprenant une pluralité de filtres passe haut, chacun desdits filtres comprenant des circuits de composants adaptés pour filtrer des signaux xDSL transmis par l'intermédiaire de ceux-ci,
au moins un filtre passe haut de ladite pluralité est équipé de commutateurs commandés (S1a, S1b ; S2a, S2b) couplés par l'intermédiaire des composants prédéterminés (C2, C4 ; N3, N4) des circuits dudit filtre,
***caractérisée en ce que*** au moins un filtre passe haut de ladite pluralité est un filtre passe haut du 3^{ème} ordre présentant un côté primaire (P) avec une première borne d'entrée (L1a) et une deuxième borne d'entrée (L1b) et un côté secondaire (S) avec une première borne de sortie (L2a) et une deuxième borne de sortie (L2b),
ledit filtre comprenant un transformateur (T1) avec un premier enroulement primaire (N1), un premier enroulement secondaire (N2), un deuxième enroulement primaire (N3) et un deuxième enroulement secondaire (N4),
lesdits première (L1a) et deuxième (L1b) bornes d'entrée étant interconnectées par l'intermédiaire de la connexion en série dudit premier enroulement primaire (N1), d'un premier condensateur (C1), d'un deuxième condensateur (C2) et dudit deuxième enroulement primaire (N3), alors que lesdites première (L2a) et deuxième (L2b) bornes de sortie sont interconnectées par l'intermédiaire de la connexion en série dudit premier enroulement secondaire (N2), d'un troisième condensateur (C3), d'un quatrième condensateur (C4) et dudit deuxième enroulement secondaire (N4),
*et **en ce que*** un premier commutateur commandé (S1a) est connecté par l'intermédiaire dudit premier condensateur (C1), alors qu'un deuxième commutateur commandé (S1b) est connecté par l'intermédiaire dudit quatrième condensateur (C4), et un troisième commutateur commandé (S2a) est connecté par l'intermédiaire dudit deuxième enroulement primaire (N3), alors qu'un quatrième commutateur commandé (S2b) est connecté par l'intermédiaire dudit deuxième enroulement secondaire (N4).

2. Carte xDSL selon la revendication 1,
***caractérisée en ce que*** ledit premier commutateur commandé (S1a) et ledit deuxième commutateur commandé (S1b) sont adaptés pour fonctionner de manière identique de sorte à être simultanément dans un même premier état,
***en ce que*** ledit troisième commutateur commandé (S2a) et ledit quatrième commutateur commandé (S2b) sont adaptés pour fonctionner de manière identique de sorte à être simultanément dans un même deuxième état,
*et **en ce que*** ledit deuxième état est opposé audit premier état.

3. Carte xDSL selon la revendication 1,
***caractérisée en ce que*** au moins un filtre passe haut de ladite pluralité est un filtre passe haut du 5^{ème} ordre identique audit filtre passe haut du 3^{ème} ordre mais comprenant en outre un cinquième condensateur (C5) couplé entre ledit premier enroulement secondaire (N2) et ladite première borne de sortie (L2a), un sixième condensateur (C6) couplé entre ledit deuxième enroulement secondaire (N4) et ladite deuxième borne de sortie (L2b), et une bobine (L1) couplée entre le point de jonction dudit premier enroulement secondaire (N2) et dudit cinquième condensateur (C5) et le point de jonction dudit deuxième enroulement secondaire (N4) et dudit sixième condensateur (C6) par l'intermédiaire de la connexion en série d'un cinquième commutateur commandé (S3a) et d'un sixième commutateur commandé (S3b),
*et **en ce que*** un septième commutateur commandé (S4a) est connecté par l'intermédiaire dudit cinquième condensateur (C5), alors qu'un huitième commutateur commandé (S4b) est connecté par l'intermédiaire dudit sixième condensateur (C6).

4. Carte xDSL selon la revendication 3,
***caractérisée en ce que*** ledit cinquième commutateur commandé (S3a) et ledit sixième commutateur commandé (S3b) sont adaptés pour fonctionner de manière identique de sorte à être simultanément dans un même troisième état,
***en ce que*** ledit septième commutateur commandé (S4a) et ledit huitième commutateur commandé (S4b) sont adaptés pour fonctionner de manière identique de sorte à être simultanément dans un même quatrième état,
*et **en ce que*** ledit troisième état est opposé audit quatrième état.

5. Carte xDSL selon les revendications 2 et 4,
***caractérisée en ce que*** ledit premier état est identique audit quatrième état,
*et **en ce que*** ledit deuxième état est identique audit troisième état.

6. Carte xDSL selon la revendication 3, ***caractérisée en ce que*** ladite carte xDSL comprend au moins un filtre passe haut du 3^{ème} ordre et un filtre passe haut du 5^{ème} ordre.

7. Carte xDSL selon la revendication 1, ***caractérisée en ce que*** tous les filtres de ladite pluralité sont équipés de commutateurs commandés couplés par l'intermédiaire des composants prédéterminés des circuits desdits filtres.

8. Carte xDSL selon la revendication 1, ***caractérisée en ce que*** ladite carte est située sur le côté Central (CO) d'un système de télécommunication.

9. Carte xDSL selon la revendication 1, ***caractérisée en ce que*** ladite carte est située sur le côté Armoire d'un système de télécommunication.
